# EUROPEAN PATENT SPECIFICATION

(11) **EP 2 848 495 B1**
(45) Date of publication and mention of the grant of the patent: **20.06.2018**
(21) Application number: 12876191.3
(22) Date of filing: 11.05.2012
(51) Int. Cl.: B62D 5/04

(54) **ELECTRIC POWER STEERING DEVICE**
ELEKTRISCHE SERVOLENKVORRICHTUNG
DISPOSITIF DE DIRECTION À ASSISTANCE ÉLECTRIQUE

(43) Date of publication of application: 18.03.2015
(73) Proprietor: Mitsubishi Electric Corporation, Tokyo 100-8310 (JP)
(72) Inventor: IKEMOTO, Katsuya, Tokyo 100-8310 (JP); SHIRAKI, Mamoru, Kobe-shi Hyogo 652-0871 (JP)
(74) Representative: Hoffmann Eitle
(86) International application number: PCT/JP2012/062104
(87) International publication number: WO 2013/168279

(56) References cited:
- EP-A1- 0 762 626
- EP-A1- 2 272 735
- JP-A- 2002 345 295
- JP-A- 2002 345 295
- JP-A- 2003 164 159
- JP-A- 2007 091 121
- JP-A- 2007 091 121
- JP-A- 2011 016 435

## Description

### Technical Field

The present invention relates to an electric power steering apparatus for reducing steering power of a driver and particularly to a feedback control technology for a motor current.

### Background Art

To date, based on information items such as steering torque and a vehicle speed, an electric power steering apparatus has driven a motor so as to reduce steering power of a driver. Accordingly, feedback control has been performed basically in such a way that a motor current is detected in order to driving-control the motor and the motor current follows a desired motor current. Moreover, as control of a switching device for supplying a motor current, PWM (Pulse Width Modulation) control has been utilized so as to intermittently supply the motor current; the control has been performed in such a way that when the assist force needs to be increased, the On-duty ratio in the PWM control is raised and that when a required current is small, the On-duty ratio is lowered.

In feedback control, the gain can be changed; when the gain is large, the responsiveness can be raised; in contrast, when the gain is small, hunting can be suppressed (e.g., refer to Patent Document 1) .

### [Prior Art Reference]

### [Patent Document]

[Patent Document 1] Japanese Patent Application Laid-Open No. 2011-16435

JP 2002 345295 discloses the preamble of claim 1.

### Disclosure of the Invention

### Problems to be Solved by the Invention

In the technology disclosed in Patent Document 1, for the purpose of obtaining better feeling of steering and raising the silence, the gain utilized in the feedback control is reduced when the assist gradient is the same as or larger than a predetermined value. In particular, in order to secure the silence at the low-speed mode and the stopping mode, the gain is reduced so that an operational sound or a vibration is suppressed from occurring. However, in the technology disclosed in Patent Document 1, when the assist gradient is the same as or larger than a predetermined value, i.e. the changing rate of the motor current value to the steering torque is large and hence the target motor current rapidly increases, the control is changed.

Out of the control-gain changes, a gain decrease weakens the tracking capability, and in contrast, a gain increase may cause hunting, noise, or vibration; thus, it is required to determine carefully.

As described above, not only the foregoing rapid increase in the motor current but also various phenomena may occur when steering is performed; thus, measures for such situations are required and hence the determination condition is complicated.

The present invention has been implemented in order to solve the foregoing problems; the objective thereof is to provide an electric power steering apparatus that changes the gain of feedback control, based on the duty ratio in PWM control.

### Means for Solving the Problems

An electric power steering apparatus according to the present invention is provided with a configuration according to claim 1.

### Advantage of the Invention

The foregoing configuration makes it possible that an electric power steering apparatus according to the present invention simply change the control gain; as a result, there is demonstrated an effect that noise and vibration are suppressed from occurring.

Objectives, features, aspects, and advantages other than the foregoing objective of the present invention will become more apparent from the following detailed description of the present invention when taken in conjunction with the accompanying drawings.

### Brief Description of the Drawings

FIG. 1 is a block diagram representing the whole circuitry of an electric power steering apparatus according to Embodiment 1 of the present invention; and
FIG. 2 is a flowchart for explaining the operation of an electric power steering apparatus according to Embodiment 1 of the present invention.

### Best Mode for Carrying Out the Invention

Hereinafter, preferred embodiments of an electric power steering apparatus according to the present invention will be explained with reference to the drawings.

### Embodiment 1

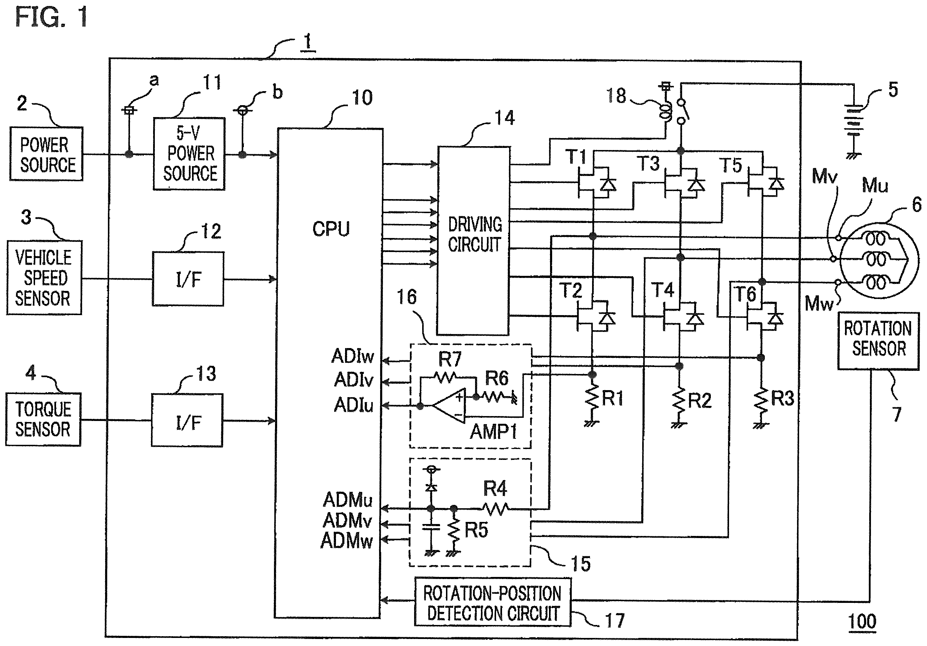

FIG. 1 is a block diagram representing the whole circuitry of an electric power steering apparatus according to Embodiment 1 of the present invention. In FIG. 1, an electric power steering apparatus 100 is configured mainly with a control unit (referred to as an ECU, hereinafter) 1, a power source 2 that is turned on by an ignition key or the like, a vehicle speed sensor 3, a torque sensor 4 that detects handwheel steering power, a battery 5, and a motor 6.

ECU 1 is provided with a microcomputer (referred to as a CPU, hereinafter) 10, which is a main constituent element, a 5-V power source 11 that generates a 5-V constant voltage b from a 12-V power source based on the power source 2, interface circuits 12 and 13 that convert signals from the vehicle speed sensor 3 and the torque sensor 4, respectively, into signals that can be received by the CPU 10, a driving circuit 14 that outputs a control signal for supplying a current to the motor 6 in accordance with a control amount from the CPU 10, two or more switching devices T1 through T6 that perform supply/shutoff of a current for the motor 6, a motor terminal voltage monitoring circuit 15 for detecting the control state of the motor 6, and a motor current monitoring circuit 16.

The CPU 10 calculates a target motor current for generating steering torque to be assisted, based on information items from the vehicle speed sensor 3 and the torque sensor 4, converts the control amount into signals that can be controlled by the switching devices T1 through T6, and then outputs the signals to the driving circuit 14. The driving circuit 14 outputs output signals for PWM-controlling the switching devices T1 through T6, based on the signals. In Embodiment 1, as the motor 6, a three-phase brushless motor is utilized; the three phases will be referred to as u-phase, v-phase, and w-phase, respectively.

The respective voltages at motor terminals Mu, Mv, and Mw are divided by the resistors R4 and R5 of the motor terminal voltage monitoring circuit 15 and are inputted to analogue-digital conversion ports ADMu, ADMv, and ADMw. The respective motor currents are inputted to analogue-digital conversion ports ADIu, ADIv, and ADIw by way of the motor current monitoring circuit 16. The motor current monitoring circuit 16 detects currents by amplifying the voltages across resistors R1, R2, and R2 that are connected between the respective anodes of the switching devices T2, T2, and T6 and the ground. Accordingly, AMP1, which is an IC for amplification, and resistors R6 and R7 for determining the amplification factor are inserted into the motor current monitoring circuit 16.

A rotation sensor 7 for detecting the rotation position of the rotor is provided in the motor 6; a signal from the rotation sensor 7 is inputted to the CPU 10 by way of a rotation-position detection circuit 17. As the rotation sensor 7, a hole device, a resolver, or the like is conceivable. Moreover, a main relay 18 for opening or closing the line for the battery 5, which is the source of the motor current is disposed at the upstream side of the switching devices T1, T3, and T5; when the control is not required or for the purpose of dealing with a failure, the driving circuit 14 outputs an ON-signal or an OFF-signal, based on a control signal from the CPU 10. The foregoing configuration is similar to the configuration of a conventional electric power steering apparatus.

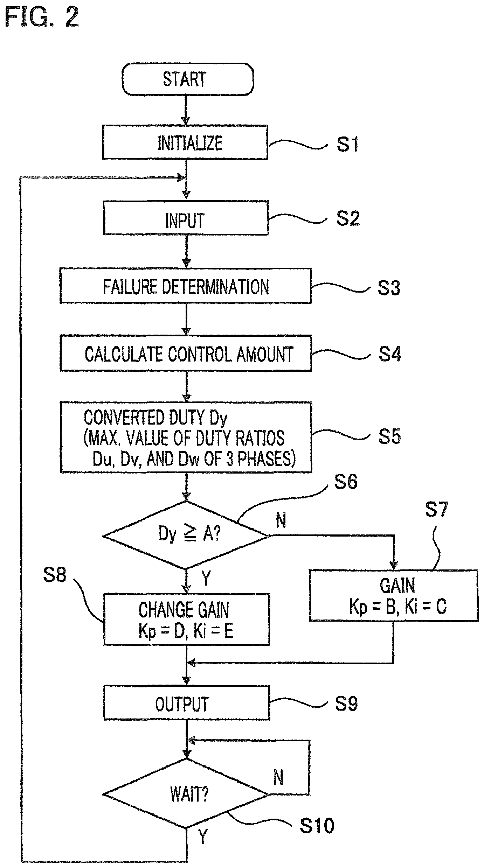

Next, a variable control gain will be explained. Because a series of operation and processing items is all performed by the CPU 10; therefore, that will be explained with reference to the flowchart in FIG. 2.

At first, the power source 2 is turned on; the 5V is supplied to the CPU 10; then, in the step S1, a RAM, ports, and the like are initialized. Then, in the step S2, various kinds of input information items, the vehicle speed, the torque, the motor terminal voltage, the motor current, and the like are inputted.

Next, in the step S3, there is performed a so-called failure determination in which based on the present operation state of the CPU 10 and the information items inputted in the step S2, it is ascertained whether or not a failure has occurred in any part of ECU1. In other words, it is ascertained whether or not any abnormality exists, by monitoring data items from the interface circuit 13, the motor terminal voltage monitoring circuit 15, the motor current monitoring circuit 16, the rotation-position detection circuit 17, and the like.

In the step S4, a target motor current IT is calculated from a vehicle speed Vl and torque Tr. Specifically, for example, the target motor current IT is calculated from a map consisting of the vehicle speed Vl and the torque Tr. Then, through PI feedback control having a proportion term and an integration term, the final control amount CTLn is calculated from the difference between the target motor current IT and a real motor current Ir that has been inputted in the step S2. In this situation, the proportion term and the integration term include gains Kp and Ki, respectively. The step S4 corresponds to a control amount calculation means.

Next, the calculated control amount CTLn is converted into duty ratios Du, Dv, and Dw for the respective three phases, in accordance with the rotation position of the motor, detected by the rotation-position detection circuit 17. The duty ratios Du, Dv, and Dw denote the respective On-duty ratios of the switching devices T1, T3, and T5, among the switching devices T1 through T6, that are arranged at the upstream sides of the motor terminals Mu, Mv, and Mw in FIG. 1. For the purpose of preventing penetrating currents, the duty ratios of the respective downstream-side switching devices T2, T4, and T6 corresponding to the upstream-side switching devices T1, T3, and T5 are duty ratios obtained by reversing the on-duty ratios of the upstream-side switching devices T1, T3, and T5. In the case where the On-duty ratios of the upstream-side switching devices T1, T3, and T5 are large, the On-duty ratios of the downstream-side switching devices T2, T4, and T6 are small, i.e., the On-times thereof are short; thus, because the current-detection shunt resistors R1 through R3 are arranged at the further downstream sides of the downstream-side switching devices T2, T4, and T6, the detection of the motor current becomes temporally difficult.

Under such circumstances, it is impossible to detect a motor current of one phase out of the three phases. However, it is a principle of a three-phase brushless motor that the total sum of the currents flowing in the respective switching devices is "0"; by utilizing this principle, the current of the one phase, which cannot be detected, is estimated from the detectable currents of the other two phases. Current feedback control including this estimation value can be performed. Accordingly, it is required to determine whether or not the detection is possible; in order to simplify this determination, it is assumed that in the case of a predetermined duty ratio or larger, the determination is impossible. The foregoing predetermined value is preliminarily determined through an experiment with a slight margin.

Thus, in the step S6, it is determined whether or not a maximum duty ratio Dy that is calculated from respective duty ratios Du, Dv, and Dw of the three phases is the same as or larger than a predetermined value A. In the case where the maximum duty ratio Dy is smaller than the predetermined value A, an ordinary gain is utilized. In the step S7, it is assumed that a proportion term gain Kp and an integration term gain Ki are B and C, respectively. In contrast, in the case where the maximum duty ratio Dy is the same as or larger than the predetermined value A, the proportion term gain Kp and the integration term gain Ki are changed to D and E, respectively, in the step S8. In this situation, D is smaller than B, and E is smaller than C; the gain is lowered, for example, by 70% to 30%. The steps S6 through S8 correspond to gain changing means.

In the step S9, based on the respective calculated duty ratios Du, Dv, and Dw of the three phases, signals are outputted to the driving circuit 14. In the step S10, in order to periodically perform processing items, the CPU 10 waits until a predetermined time elapses, and after the predetermined time has elapsed, the CPU 10 returns to the step S2 so as to periodically continue processing items in the same manner.

As described above, in the electric power steering apparatus according to Embodiment 1, the electric current feedback gain is changed in such a way as to decrease or return to the previous value, based on the duty ratio in the PWM control; thus, the electric current feedback gain can be changed by an extremely simple determination, and switching between the three phases and the two phases can concurrently be implemented. When the duty ratio is large, the control is performed while the motor torque is approximately maximum; thus, the operational sound and the vibration fall within respective ranges where they are relatively large. Therefore, it can be expected that this gain lowering processing suppresses the operational sound and the vibration from occurring. Because the gain is changed in the step S8, the gain change demonstrates an effect in the next step S4 of the CPU 10.

### Embodiment 2

Next, an electric power steering apparatus according to Embodiment 2 of the present invention will be explained. The whole circuitry of an electric power steering apparatus according to Embodiment 2 is similar to the whole circuitry of the electric power steering apparatus according to Embodiment 1; therefore, the explanation therefor will be omitted.

In Embodiment 1, in the step S8 of the flowchart in FIG. 2, the gain coefficients are changed so as to lower the gain; however, when it is assumed that the CPU 10 periodically processes each routine, for example, in 10 msec, the gain is drastically decreased in an instantaneous manner. Accordingly, the continuity of the control may be broken. Moreover, the control amount may also rapidly decrease and hence the duty ratio again becomes lower than the predetermined value A in the next routine. Therefore, gradually decreasing processing is desirable in which the gain is gradually lowered every processing period of 10 msec.

In addition, making a moving average of the gain values can prevent a large, step-like drop. In the case where the gain is gradually decreased through the foregoing method, it is required to set the time constant of the gain decrease to be smaller than the torque time constant of the motor current.

Furthermore, when the control period of the CPU 10, the period of the PWM, and the control period of the feedback are all the same, there exists no problem; however, due to the operational circumstances of the CPU 10 and ECU1 and the like, these periods may differ from one another. In this case, it is made possible to select one of the control period of the CPU 10, the period of the PWM, and the control period of the feedback, considering the control performance, the sound, the vibration, and the construction of the software for the CPU 10.

In the case where the control period of the CPU 10 is selected, the processing represented in the flowchart of FIG. 2 is sufficient; thus, the construction of the software is simple. In the case where the period of the PWM is selected, the duty ratio is converted considering the decrease in the gain; thus, the conversion is implemented by use of a subroutine other than that represented in FIG. 2. In contrast, in the case where the feedback control period is selected, it is only necessary to add a gain decrease when the control amount is calculated; however, a subroutine other than that in FIG. 2 is utilized. Whatever the case may be, it is only necessary to make a selection suitable for the system.

As described above, by gradually decreasing the gain value, noise is prevented from being produced and the continuity of the control is secured; thus, it is made possible to suppress the noise and the vibration.

### Embodiment 3

Next, an electric power steering apparatus according to Embodiment 3 of the present invention will be explained. The whole circuitry of an electric power steering apparatus according to Embodiment 3 is similar to the whole circuitry of the electric power steering apparatus according to Embodiment 1; therefore, the explanation therefor will be omitted.

In Embodiment 1, in the step S6 of FIG. 2, the maximum duty ratio Dy and the predetermined value A are compared with each other; however, in Embodiment 2, the comparison is implemented not once but twice or more times with different predetermined values A1, A2, and A3 (A1 > A2 > A3), and the gain is decreased each time the comparison is implemented. Moreover, when the difference between the target motor current IT and the real motor current Ir is within a predetermined value, the gain can further be decreased. In the case where the real motor current Ir is close to the target motor current IT, the responsiveness is not deteriorated and no hunching is caused even when the gain is decreased; therefore, in terms of the silence and the vibration suppression, the gain can further be decreased.

As described above, when the condition of the gain decrease is added and the gain is decreased twice or more times, the silence can be raised and the vibration can be suppressed, without sacrificing the continuity of the control.

### Embodiment 4

Next, an electric power steering apparatus according to Embodiment 4 of the present invention will be explained. The whole circuitry of an electric power steering apparatus according to Embodiment 4 is similar to the whole circuitry of the electric power steering apparatus according to Embodiment 1; therefore, the explanation therefor will be omitted.

In each of foregoing Embodiments 1 through 3, the determination is implemented by comparing the predetermined value A with the maximum duty ratio Dy calculated from the respective duty ratios Du, Dv, and Dw of the three phases for controlling the switching devices T1 through T6; however, the real duty ratio Dy may largely fluctuate every control period. Accordingly, as explained in Embodiment 2, even when the gain has gradually decreased in a predetermined time, hunching cf the gain, i.e., gain decrease or gain non-decrease may be repeated. Therefore, for the predetermined value A at which the gain decrease is implemented, a different predetermined value F for determining a non-decrease is utilized so as to add a hysteresis. Alternatively, a method may be allowed in which a duty ratio Dyf, obtained by applying a filter to the maximum duty ratio Dy so as to suppress a rapid change of the duty ratio, is utilized and the Dyf and the predetermined value A are compared with each other.

As described above, by adding a hysteresis to the predetermined value or utilizing a filtered duty ratio, the foregoing hunching can be prevented; thus, transient control can more smoothly be implemented in terms of the gain decrease and returning to the previous value.

### Description of Reference Numerals

1: control unit (ECU)
2: power source
3: vehicle speed sensor
4: torque sensor
5: battery
6: motor
7: rotation sensor
10: microcomputer (CPU)
11: 5-V power source
12, 13: interface circuit
14: driving circuit
15: motor terminal voltage monitoring circuit
16: motor current monitoring circuit
17: rotation-position detection circuit
18: main relay
100: electric power steering apparatus

## Claims

1. An electric power steering apparatus (100) comprising:
a torque sensor (4) configured to detect steering torque of a handwheel;
a motor (6) configured to assist handwheel steering power; and
a control unit (1) configured to control a current of the motor (6), based on information from the torque sensor (4), and output a PWM signal for driving the motor (6),
wherein the control unit (1) includes a microcomputer (10), and
wherein the microcomputer (10) includes: a control amount calculation means configured to calculate a target motor current value, based on the information from the torque sensor (4), monitor a current supplied to the motor (6), perform feedback control in accordance with the difference between the target motor current value and a real motor current value detected by a monitor and then calculate a control amount; and a gain changing means configured to change a gain utilized for the feedback control, in the case where it is detected from the control amount that a duty ratio of the PWM signal is the same as or larger than a predetermined value,
**characterized in that** the gain changing means is further configured to decrease the gain to a preliminarily determined value in a predetermined time, the decrease being implemented based on a control period so that the gain is decreased with a time constant that is smaller than a time constant in which torque for the current of the motor (6) is produced.

2. The electric power steering apparatus according to claim 1, wherein the motor (6) has a multi-phase winding, and in the case where the duty ratio is the same as or larger than a predetermined value, the microcomputer (10) is configured to stop monitoring of a motor current in part of the winding and perform feedback control by monitoring a monitor current in the residual winding.

3. The electric power steering apparatus according to claim 1, wherein the gain changing means is further configured to utilize a plurality of predetermined values for the predetermined value and increase the decrease in a feedback gain along with the respective predetermined values.

4. The electric power steering apparatus according to claim 1, wherein in the case where the duty ratio is the same as or larger than a predetermined value and the difference between the target motor current value and a real motor current value detected by the monitor is within a predetermined value, the gain changing means is further configured to further decrease the gain.

5. The electric power steering apparatus according to any one of claims 1 through 4, wherein the gain is changed in both a proportion term and an integration term of a motor current value, based on the difference between the target motor current value and a real motor current value detected by the monitor.

## Patentansprüche

1. Eine elektrische Servolenkung (100) umfassend:
einen Drehmomentsensor (4), welcher so konfiguriert ist, dass er ein Lenkdrehmoment eines Handrades erfasst;
einen Motor (6), welcher so konfiguriert ist, dass er eine Handradlenkkraft unterstützt;
eine Kontrolleinheit (1), welche so konfiguriert ist, dass sie einen Strom des Motors (6) basierend auf Informationen vom Drehmomentsensor (4) kontrolliert und ein PWM Signal zum Antreiben des Motors (6) ausgibt,
wobei die Kontrolleinheit (1) einen Mikrocomputer (10) beinhaltet, und
wobei der Mikrocomputer (10) beinhaltet: ein Kontrollmengen-Berechnungsmittel, welches so konfiguriert ist, dass es einen Target-Motorstromwert basierend auf der Information vom Drehmomentsensor (4) berechnet, einen dem Motor (6) zugeführten Strom überwacht, eine Feedbackkontrolle in Übereinstimmung mit dem von einem Monitor erfassten Unterschied zwischen dem Target-Motorstromwert und einem realen Motorstromwert ausführt und dann eine Kontrollmenge berechnet; und ein Verstärkungswechselmittel, welches so konfiguriert ist, dass es eine für die Feedbackkontrolle genutzte Verstärkung ändert für den Fall, dass von der Kontrollmenge erkannt ist, dass eine relative Einschaltdauer des PWM Signals größer oder gleich eines vorbestimmten Wertes ist,
dadurch charakterisiert, dass das Verstärkungswechselmittel zusätzlich so konfiguriert ist, dass es die Verstärkung zu einem vorher bestimmten Wert in einer vorbestimmten Zeit verringert, wobei die Verringerung basierend auf einem Kontrollzeitraum implementiert ist, sodass sich die Verstärkung mit einer Zeitkonstante, welche kleiner ist als eine Zeitkonstante in dem ein Drehmoment für den Strom des Motors (6) produziert ist, verringert.

2. Die elektrische Servolenkung gemäß Anspruch 1, wobei der Motor (6) eine Mehrphasenwicklung besitzt, und für den Fall dass die relative Einschaltdauer größer oder gleich eines vorbestimmten Wertes ist, der Mikrocomputer (10) so konfiguriert ist, dass es die Überwachung eines Motorstroms in einem Teil der Wicklung stoppt und Feedbackkontrolle durch das Überwachen eines Monitorstroms in der restlichen Wicklung ausführt.

3. Die elektrische Servolenkung gemäß Anspruch 1, wobei das Verstärkungswechselmittel zusätzlich so konfiguriert ist, dass es eine Vielzahl an vorbestimmten Werten für den vorbestimmten Wert benutzt und die Verringerung in einer Feedbackverstärkung zusammen mit den jeweils vorbestimmten Werten erhöht.

4. Die elektrische Servolenkung gemäß Anspruch 1, wobei für den Fall, dass die relative Einschaltrate größer oder gleich eines vorbestimmten Wertes ist und der von dem Monitor erfasste Unterschied zwischen dem Target-Motorstromwert und einem realen Motorstromwert in einem vorbestimmten Wert liegt, das Verstärkungswechselmittel zusätzlich so konfiguriert ist, dass es die Verstärkung zusätzlich verringert.

5. Die elektrische Servolenkung gemäß einem der Ansprüche 1 bis 4, wobei die Verstärkung basierend auf dem von dem Monitor erfassten Unterschied zwischen dem Target-Motorstromwert und einem realen Motorstromwert sowohl in einen Proportionalanteil als auch in einen Integralanteil eines Motorstromwerts geändert wird.

## Revendications

1. Appareil de direction à assistance électrique (100) comprenant :
un capteur de couple (4) configuré pour détecter un couple de direction d'un volant ;
un moteur (6) configuré pour aider l'assistance de direction du volant ; et
une unité de commande (1) configurée pour commander un courant du moteur (6), sur la base d'informations du capteur de couple (4), et émettre un signal PWM pour entraîner le moteur (6),
dans lequel l'unité de commande (1) inclut un microordinateur (10), et
dans lequel le microordinateur (10) inclut : un moyen de calcul de quantité de commande configuré pour calculer une valeur de courant de moteur cible, sur la base des informations du capteur de couple (4), surveiller un courant fourni au moteur (6), réaliser une commande de rétroaction selon la différence entre la valeur de courant de moteur cible et une valeur de courant de moteur réelle détectée par un dispositif de surveillance et ensuite calculer une quantité de commande ; et un moyen de changement de gain configuré pour changer un gain utilisé pour la commande de rétroaction, dans le cas où il est détecté à partir de la quantité de commande qu'un rapport de service du signal PWM est le même ou plus grand qu'une valeur prédéterminée,
**caractérisé en ce que** le moyen de changement de gain est en outre configuré pour diminuer le gain à une valeur déterminée de manière préliminaire dans un temps prédéterminé, la diminution étant réalisée sur la base d'une période de commande de sorte que le gain soit diminué avec une constante de temps qui est inférieure à une constante de temps dans laquelle le couple pour le courant du moteur (6) est produit.

2. Appareil de direction à assistance électrique selon la revendication 1, dans lequel le moteur (6) possède un enroulement multiphase, et dans le cas où le rapport de service est le même ou est plus grand qu'une valeur prédéterminée, le microordinateur (10) est configuré pour arrêter la surveillance d'un courant de moteur en partie de l'enroulement et réaliser la commande de rétroaction par surveillance d'un courant de dispositif de surveillance dans l'enroulement résiduel.

3. Appareil de direction à assistance électrique selon la revendication 1, dans lequel le moyen de changement de gain est en outre configuré pour utiliser une pluralité de valeurs prédéterminées pour la valeur prédéterminée et augmenter la diminution d'un gain de rétroaction avec les valeurs prédéterminées respectives.

4. Appareil de direction à assistance électrique selon la revendication 1, dans lequel dans le cas où le rapport de service est le même ou plus grand qu'une valeur prédéterminée et la différence entre la valeur de courant de moteur cible et une valeur de courant de moteur réelle détectée par le dispositif de surveillance est dans une valeur prédéterminée, le moyen de changement de gain est en outre configuré pour diminuer davantage le gain.

5. Appareil de direction à assistance électrique selon l'une quelconque des revendications 1 à 4, dans lequel le gain est changé à la fois en termes de proportion et en termes d'intégration d'une valeur de courant de moteur, sur la base de la différence entre la valeur de courant de moteur cible et une valeur de courant de moteur réelle détectée par le dispositif de surveillance.
